# EUROPEAN PATENT APPLICATION

(11) **EP 4 159 814 A1**
(43) Date of publication of application: **05.04.2023**
(21) Application number: 21814060.6
(22) Date of filing: 12.04.2021
(51) Int. Cl.: C08L 83/07, C08K 5/05, C08K 5/3475, C08K 5/54, C08L 83/05

(54) **TWO-PACK TYPE ADDITION CURABLE SILICONE RUBBER COMPOSITION**

(30) Priority: 26.05.2020 JP 2020091225
(71) Applicant: SHIN-ETSU CHEMICAL CO., LTD., Tokyo 1000005 (JP)
(72) Inventor: HARA Tatsuei, Annaka-shi, Gunma 379-0224 (JP); KATO Nobu, Annaka-shi, Gunma 379-0224 (JP)
(74) Representative: Sonnenhauser, Thomas Martin
(86) International application number: PCT/JP2021/015140
(87) International publication number: WO 2021/241036

(57) **Abstract**

The present invention is a two-pack addition-curable silicone rubber composition, containing: (A) an alkenyl-group-containing organopolysiloxane; (B) an organohydrogenpolysiloxane; (C) a platinum-based catalyst; (D) benzotriazole and/or a benzotriazole derivative; (E-1) an acetylene alcohol compound and/or a compound modified with silane or siloxane; and (E-2) an alkenyl-group-containing cyclic organopolysiloxane and/or an alkenyl-group-containing chain organopolysiloxane that has a large amount of alkenyl groups and differs from the component (A), wherein a composition X contains the components (C) and (E-2), a composition Y contains the components (B), (D), and (E-1), at least one of the compositions X or Y contains the component (A), and the two-pack addition-curable silicone rubber composition is curable by mixing the composition X and the composition Y. This provides: a two-pack addition-curable silicone rubber composition having good storability and a long pot life in injection molding; and a cured product thereof.

## Description

### TECHNICAL FIELD

The present invention relates to a two-pack addition-curable silicone rubber composition.

### BACKGROUND ART

Silicone rubbers are used in wide fields such as onboard hoses, gasket materials, electric and electronic components including rolls for duplicators and packings for microwave ovens, building members, and coating materials for fibers since having good thermal resistance, cold resistance, safety, electrical insulation, weather resistance, and durability. Methods for molding the silicone rubber include cast molding, compression molding, dispenser molding, injection molding, extrusion molding, and transfer molding, and the most efficient method in terms of a molding cycle is injection molding using an addition-curable liquid silicone rubber. Molding at low temperature in a short time has recently been required to further reduce environmental load.

To increase a curing rate of the addition-curable liquid silicone rubber composition, increase in a catalyst or reduction in an inhibitor is needed. However, merely increasing the catalyst or reducing the inhibitor considerably shortens a usable time (pot life) to cause a problem of significantly impaired operability. As a method for resolving this problem, proposed is a method in which a slight amount of a triazole compound is added into an addition-crosslinkable silicone rubber composition to obtain rapid curability at low temperature and a sufficient pot life for operability (Patent Document 1).

When the above addition-crosslinkable silicone rubber composition containing a slight amount of the triazole compound is molded with an injection molding machine, the sufficient pot life is achieved in a portion where two packs are uniformly mixed. However, mixing is ununiform in a portion where the two packs begin to mix in the molding machine, such as a premix portion, leading to a problem that the pot life in a portion with a high concentration of a platinum catalyst becomes shorter than the designed pot life.

When an acetylene alcohol compound as a reaction inhibitor is mixed in advance with the component containing the platinum catalyst to solve this problem, there is a problem that platinum black is generated to discolor the material. In addition, when benzotriazole as a reaction inhibitor is mixed in advance with the component containing the platinum catalyst, it is known that curing becomes slow over time to deteriorate storage stability.

### CITATION LIST

### PATENT LITERATURE

Patent Document 1: JP 2014-122271 A

### SUMMARY OF INVENTION

### TECHNICAL PROBLEM

The present invention has been made in view of the above-described circumstances. An object of the present invention is to provide a two-pack addition-curable silicone rubber composition having good storability, moldability at relatively low temperature in a short time, and a long pot life in injection molding even when a mixing ratio of the two packs changes.

### SOLUTION TO PROBLEM

To achieve the object, the present invention provides a two-pack addition-curable silicone rubber composition, comprising:
(A) 100 parts by mass of an alkenyl-group-containing organopolysiloxane having at least two alkenyl groups bonded to a silicon atom in one molecule;
(B) 0.2 to 20 parts by mass of an organohydrogenpolysiloxane having at least two hydrogen atoms bonded to a silicon atom in one molecule;
(C) 0.5 to 500 ppm, as a platinum group metal, of a platinum-based catalyst relative to a total mass of the components (A) and (B) based on mass;
(D) 2 to 100 moles of benzotriazole and/or a benzotriazole derivative relative to 1 mole of the platinum atom of the component (C);
(E-1) an acetylene alcohol compound and/or a compound in which an alcoholic hydroxy group of the acetylene alcohol compound is modified with silane or siloxane at 1 to 500 moles of an acetylene group relative to 1 mole of the platinum atom of the component (C); and
(E-2) an alkenyl-group-containing cyclic organopolysiloxane having at least one alkenyl group on every silicon atom thereof and/or an alkenyl-group-containing chain organopolysiloxane in which a proportion of alkenyl groups to total substituents bonded to a silicon atom is 20 mol% or more, the organopolysiloxanes differing from the component (A), at 1 to 500 moles relative to 1 mole of the platinum atom of the component (C),
wherein a composition X contains at least the components (C) and (E-2), a composition Y contains at least the components (B), (D), and (E-1), at least one of the compositions X or Y contains the component (A), and the two-pack addition-curable silicone rubber composition is curable by mixing the composition X and the composition Y.

Such a configuration can provide a two-pack addition-curable silicone rubber composition having good storability, moldability at relatively low temperature in a short time, and a long pot life in injection molding even when a mixing ratio of the two packs changes, and can also provide a silicone rubber cured product formed by curing the above composition.

Preferably, provided is the two-pack addition-curable silicone rubber composition wherein the alkenyl-group-containing cyclic organopolysiloxane in the component (E-2) is represented by the following general formula (1), 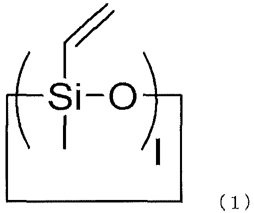
wherein l represents 3 or more, and/or
the alkenyl-group-containing chain organopolysiloxane in the component (E-2) is represented by the following general formula (2), 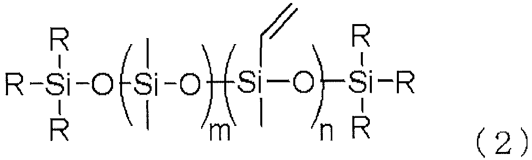
wherein R represents a non-substituted or substituted monovalent hydrocarbon group having 1 to 10 carbon atoms, R being same as or different from each other, m represents 0 or more, n represents 2 or more, m+n represents 2 or more, and n/(m+n) represents 0.2 or more.

Using such an organopolysiloxane enables to control the reaction with maintaining the storage stability of the platinum catalyst.

Preferably, the two-pack addition-curable silicone rubber composition further comprises 5 to 100 parts by mass of a reinforcing silica fine powder as a component (F) relative to 100 parts by mass of the component (A).

Using the reinforcing silica fine powder can strengthen the silicone rubber composition.

Preferably, the component (F) is a fumed silica having a specific surface area with a BET method of 50 m²/g or more.

Using such a fumed silica further increases the rubber strength.

Preferably, provided is the two-pack addition-curable silicone rubber composition, wherein
where T10 is defined as a curing time yielding 10% torque of a maximum torque, the maximum torque obtained from curing at 110 °C for 5 minutes followed by measuring a degree of curing in a curing test using a torsion oscillating corn-die curemeter in accordance with JIS K 6300-2:2001, and T90 is defined as a curing time yielding 90% torque of the maximum torque,
a curing rate of a mixture in which the composition X and the composition Y are each separately stored at 80°C for 3 days and then uniformly mixed has T10 of 10 to 60 seconds and (T90-T10) of 50 seconds or shorter.

Such a composition yields good operation efficiency and moldability.

In addition, preferably provided is the two-pack addition-curable silicone rubber composition wherein η₂₄ ≤ 5000 Pa·s or less where η₂₄ is a viscosity at a shearing rate of 0.9 s⁻¹ of an uniform mixture of the composition X and the composition Y after still standing at 25°C for 24 hours.

Such a silicone rubber composition yields good moldability.

### ADVANTAGEOUS EFFECTS OF INVENTION

The present invention can provide a two-pack addition-curable silicone rubber composition having good storability, moldability at relatively low temperature in a short time, and a long pot life in injection molding even when a mixing ratio of the two packs changes, and can also provide a silicone rubber cured product formed by curing the above composition.

### DESCRIPTION OF EMBODIMENTS

As noted above, there have been demands for providing a two-pack addition-curable silicone rubber composition having good storability, moldability at relatively low temperature in a short time, and a long pot life in injection molding even when a mixing ratio of the two packs changes, and a silicone rubber cured product formed by curing the above composition.

The present inventors have earnestly studied to achieve the above object and consequently found that a two-pack addition-curable silicone rubber composition consisting of a composition X and a composition Y, separated into two packs so that the composition X contains a platinum catalyst and an alkenyl-group-containing organopolysiloxane having a specific structure; the composition Y contains an organohydrogenpolysiloxane, an acetylene alcohol compound and/or a compound in which an alcoholic hydroxy group of the acetylene alcohol compound is modified with silane or siloxane, and benzotriazole and/or a benzotriazole derivative, can yield a two-pack addition-curable silicone rubber composition having good storability, moldability at relatively low temperature in a short time, and a long pot life in injection molding even when a mixing ratio of the two packs changes, and can also yield a silicone rubber cured product formed by curing the above composition. This finding has led to the completion of the present invention.

Specifically, the present invention is a two-pack addition-curable silicone rubber composition, comprising:
(A) 100 parts by mass of an alkenyl-group-containing organopolysiloxane having at least two alkenyl groups bonded to a silicon atom in one molecule;
(B) 0.2 to 20 parts by mass of an organohydrogenpolysiloxane having at least two hydrogen atoms bonded to a silicon atom in one molecule;
(C) 0.5 to 500 ppm, as a platinum group metal, of a platinum-based catalyst relative to a total mass of the components (A) and (B) based on mass;
(D) 2 to 100 moles of benzotriazole and/or a benzotriazole derivative relative to 1 mole of the platinum atom of the component (C);
(E-1) an acetylene alcohol compound and/or a compound in which an alcoholic hydroxy group of the acetylene alcohol compound is modified with silane or siloxane at 1 to 500 moles of an acetylene group relative to 1 mole of the platinum atom of the component (C); and
(E-2) an alkenyl-group-containing cyclic organopolysiloxane having at least one alkenyl group on every silicon atom thereof and/or an alkenyl-group-containing chain organopolysiloxane in which a proportion of alkenyl groups to total substituents bonded to a silicon atom is 20 mol% or more, the organopolysiloxanes differing from the component (A), at 1 to 500 moles relative to 1 mole of the platinum atom of the component (C),
wherein a composition X contains at least the components (C) and (E-2), a composition Y contains at least the components (B), (D), and (E-1), at least one of the compositions X or Y contains the component (A), and the two-pack addition-curable silicone rubber composition is curable by mixing the composition X and the composition Y.

Hereinafter, the present invention will be described in detail, but the present invention is not limited thereto.

### [Two-Pack Addition-Curable Silicone Rubber Composition]

The inventive two-pack addition-curable silicone rubber composition contains the following components (A), (B), (C), (D), (E-1), and (E-2).

### [(A) Alkenyl-Group-Containing Organopolysiloxane]

The component (A) is an organopolysiloxane having at least two alkenyl groups bonded to a silicon atom in one molecule, and is a main component (base polymer) of the present composition. As the component (A), organopolysiloxanes represented by the following average composition formula (3) can be used,

R¹ₐSiO_{(4-a)/2} (3)

wherein R¹ represents a non-substituted or substituted monovalent hydrocarbon group having 1 to 10, preferably 1 to 8, carbon atoms, and R¹ being same as or different from each other. "a" represents a positive number of 1.5 to 2.8, preferably a positive number of 1.8 to 2.5, and more preferably a positive number of 1.95 to 2.05.

Examples of the non-substituted or substituted monovalent hydrocarbon group having 1 to 10 carbon atoms represented by R¹ include: alkyl groups, such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups, such as a phenyl group, a tolyl group, a xylyl group, and a naphthyl group; aralkyl groups, such as a benzyl group, a phenylethyl group, and a phenylpropyl group; alkenyl groups, such as a vinyl group, an allyl group, a propenyl group, an isopropenyl group, a butenyl group, a hexenyl group, a cyclohexenyl group, and an octenyl group; and groups obtained from these groups by substituting a part or all of hydrogen atoms therein with a halogen atom, such as fluorine, bromine, and chlorine, a cyano group, or the like. Examples of such substituted groups include a chloromethyl group, a chloropropyl group, a bromoethyl group, a trifluoropropyl group, and a cyanoethyl group. In all R¹, 90 mol% or more, particularly all of R¹ except for the alkenyl groups are preferably methyl groups.

At least two of R¹ have to be alkenyl groups (preferably having 2 to 8 carbon atoms, and further preferably 2 to 6 carbon atoms), and are particularly preferably vinyl groups.

A content of the alkenyl group is preferably 1.0×10⁻⁶ to 5.0×10⁻³ mol/g, and particularly preferably 1.0×10⁻⁵ to 2.0×10⁻³ mol/g in the organopolysiloxane. When the content of the alkenyl group is 1.0×10⁻⁶ to 5.0×10⁻³ mol/g, a gummy substance can be obtained. This alkenyl group may be bonded to a silicon atom at a terminal of the molecular chain, may be bonded to a silicon atom inside the molecular chain, or may be bonded to both of them.

This organopolysiloxane basically has a linear chain structure in which both the terminals of the molecular chain are blocked with triorganosiloxy groups and the main chain is composed of a diorganosiloxane repeating unit. This organopolysiloxane may partially have a branched structure, a cyclic structure, etc.

Examples of the organopolysiloxane represented by the formula (3) include dimethylpolysiloxane blocked at both terminals with dimethylvinylsiloxy groups, dimethylsiloxane-methylvinylsiloxane copolymer blocked at both terminals with dimethylvinylsiloxy groups, dimethylsiloxane-diphenylsiloxane copolymer blocked at both terminals with dimethylvinylsiloxy groups, dimethylsiloxane-methylvinylsiloxane-diphenylsiloxane copolymer blocked at both terminals with dimethylvinylsiloxy groups, methyltrifluoropropylpolysiloxane blocked at both terminals with dimethylvinylsiloxy groups, dimethylsiloxane-methyltrifluoropropylsiloxane copolymer blocked at both terminals with dimethylvinylsiloxy groups, dimethylsiloxane-methyltrifluoropropylsiloxane-methylvinylsiloxane copolymer blocked at both terminals with dimethylvinylsiloxy groups, dimethylsiloxane-vinylmethylsiloxane copolymer blocked at both terminals with trimethylsiloxy groups, dimethylsiloxane-vinylmethylsiloxane-diphenylsiloxane copolymer blocked at both terminals with trimethylsiloxy groups, vinylmethylsiloxane-methyltrifluoropropylsiloxane copolymer blocked at both terminals with trimethylsiloxy groups, dimethylpolysiloxane blocked at terminals with a trimethylsiloxy group and a dimethylvinylsiloxy group, dimethylsiloxane-methylvinylsiloxane copolymer blocked at terminals with a trimethylsiloxy group and a dimethylvinylsiloxy group, dimethylsiloxane-diphenylsiloxane copolymer blocked at terminals with a trimethylsiloxy group and a dimethylvinylsiloxy group, dimethylsiloxane-diphenylsiloxane-methylvinylsiloxane copolymer blocked at terminals with a trimethylsiloxy group and a dimethylvinylsiloxy group, methyltrifluoropropylpolysiloxane blocked at terminals with a trimethylsiloxy group and a dimethylvinylsiloxy group, dimethylsiloxane-methyltrifluoropropylsiloxane copolymer blocked at terminals with a trimethylsiloxy group and a dimethylvinylsiloxy group, dimethylsiloxane-methyltrifluoropropylsiloxane-methylvinylsiloxane copolymer blocked at terminals with a trimethylsiloxy group and a dimethylvinylsiloxy group, dimethylpolysiloxane blocked at both terminals with methyldivinylsiloxy groups, dimethylsiloxane-methylvinylsiloxane copolymer blocked at both terminals with methyldivinylsiloxy groups, dimethylsiloxane-diphenylsiloxane copolymer blocked at both terminals with methyldivinylsiloxy groups, dimethylsiloxane-methylvinylsiloxane-diphenylsiloxane copolymer blocked at both terminals with methyldivinylsiloxy groups, methyltrifluoropropylpolysiloxane blocked at both terminals with methyldivinylsiloxy groups, dimethylsiloxane-methyltrifluoropropylsiloxane copolymer blocked at both terminals with methyldivinylsiloxy groups, dimethylsiloxane-methyltrifluoropropylsiloxane-methylvinylsiloxane copolymer blocked at both terminals with methyldivinylsiloxy groups, dimethylpolysiloxane blocked at both terminals with trivinylsiloxy groups, dimethylsiloxane-methylvinylsiloxane copolymer blocked at both terminals with trivinylsiloxy groups, dimethylsiloxane-diphenylsiloxane copolymer blocked at both terminals with trivinylsiloxy groups, dimethylsiloxane-methylvinylsiloxane-diphenylsiloxane copolymer blocked at both terminals with trivinylsiloxy groups, methyltrifluoropropylpolysiloxane blocked at both terminals with trivinylsiloxy groups, dimethylsiloxane-methyltrifluoropropylsiloxane copolymer blocked at both terminals with trivinylsiloxy groups, and dimethylsiloxane-methyltrifluoropropylsiloxane-methylvinylsiloxane copolymer blocked at both terminals with trivinylsiloxy groups.

On the molecular weight, an average polymerization degree (number-average polymerization degree Mn, the same applies hereinafter) is 1,500 or less, typically 100 to 1,500, and preferably 150 to 1,000. When the average polymerization degree is 100 to 1,500, a gummy substance can be obtained to yield good moldability. This average polymerization degree can be typically determined as a polystyrene-conversion value with gel permeation chromatography (GPC) analysis using toluene as a developing solvent.

A viscosity of the organopolysiloxane of the component (A) is not particularly limited, but the viscosity at 25°C is preferably 200 to 150,000 mPa·s, and more preferably 400 to 100,000 mPa·s in terms of good operability in handling of the composition and strength of the obtained cured product. Note that the viscosity in the present invention is a viscosity at 25°C measured by a method in accordance with JIS K 7117-1:1999, and a value measured with a BH-type rotational viscometer.

As the component (A), one or two or more types of organopolysiloxane having different molecular structures or polymerization degrees can be used in combination as long as the organopolysiloxane has at least two alkenyl groups bonded to a silicon atom.

### [(B) Organohydrogenpolysiloxane]

The component (B) is an organohydrogenpolysiloxane having at least two, preferably three or more, hydrogen atoms bonded to a silicon atom (SiH groups) in one molecule. The SiH group in the molecule is crosslinked with the alkenyl group bonded to a silicon atom in the component (A) via a hydrosilylation addition reaction to serve as a curing agent (crosslinker) to cure the composition.

Preferably used as this organohydrogenpolysiloxane of the component (B) is, for example, an organohydrogenpolysiloxane represented by the following average composition formula (4) and having at least two, preferably three or more, more preferably 3 to 100, and further preferably 4 to 50 silicon atom-bonded hydrogen atoms (SiH groups) in one molecule,

R²_{b}H_{c}SiO_{(4-b-c)/2} (4)

wherein R² represents a non-substituted or substituted monovalent hydrocarbon group having 1 to 10, preferably 1 to 8, carbon atoms, and R² being same as or different from each other. "b" represents a positive number of 0.7 to 2.1, "c" represents a positive number of 0.001 to 1.0, and "b+c" represents a positive number satisfying 0.8 to 3.0.

Examples of the monovalent hydrocarbon group of R² include the same group as the exemplified groups of R¹, but the monovalent hydrocarbon group of R² preferably has no aliphatic unsaturated group.
"b" represents a positive number of 0.7 to 2.1, and preferably a positive number of 0.8 to 2.0. "c" represents a positive number of 0.001 to 1.0, and preferably a positive number of 0.01 to 1.0. "b+c" represents a positive number satisfying 0.8 to 3.0, and preferably a positive number satisfying 1.0 to 2.5. A molecular structure of the organohydrogenpolysiloxane may be any of a linear chain, a cyclic, a branched chain, and a three-dimensional web structure.

A content of the SiH group is preferably 0.0005 to 0.020 mol/g, and particularly preferably 0.001 to 0.017 mol/g in the organohydrogenpolysiloxane. When the content of the SiH group is 0.0005 mol/g or more, the crosslinking sufficiently proceeds and the strength is likely to be achieved. When the content of the SiH group is 0.020 mol/g or less, a stable organohydrogenpolysiloxane can be obtained.

In this case, preferably used is an organohydrogenpolysiloxane having approximately 2 to 300, particularly approximately 3 to 150, and especially approximately 4 to 100 silicon atoms in one molecule (or polymerization degree) and being liquid at a room temperature (25°C). The hydrogen atom bonded to the silicon atom may be positioned at any of a terminal of the molecular chain, an inside of the molecular chain (not terminal), or may be positioned at both thereof.

Examples of the organohydrogenpolysiloxane of the component (B) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane-dimethylsiloxane cyclic copolymer, methylhydrogenpolysiloxane blocked at both terminals with trimethylsiloxy groups, dimethylsiloxane-methylhydrogensiloxane copolymer blocked at both terminals with trimethylsiloxy groups, dimethylpolysiloxane blocked at both terminals with dimethylhydrogensiloxy groups, dimethylsiloxane-methylhydrogensiloxane copolymer blocked at both terminals with dimethylhydrogensiloxy groups, methylhydrogensiloxane-diphenylsiloxane copolymer blocked at both terminals with trimethylsiloxy groups, methylhydrogensiloxane-diphenylsiloxane-dimethylsiloxane copolymer blocked at both terminals with trimethylsiloxy groups, methylhydrogensiloxane-methylphenylsiloxane-dimethylsiloxane copolymer blocked at both terminals with trimethylsiloxy groups, methylhydrogensiloxane-dimethylsiloxane-diphenylsiloxane copolymer blocked at both terminals with dimethylhydrogensiloxy groups, methylhydrogensiloxane-dimethylsiloxane-methylphenylsiloxane copolymer blocked at both terminals with dimethylhydrogensiloxy groups, a copolymer composed of a (CH₃)₂HSiO_{1/2} unit, a (CH₃)₃SiO_{1/2} unit, and a SiO_{4/2} unit, a copolymer composed of a (CH₃)₂HSiO_{1/2} unit and a SiO_{4/2} unit, a copolymer composed of a (CH₃)₂HSiO_{1/2} unit, a SiO_{4/2} unit, and a (C₆H₅)SiO_{3/2} unit, an organohydrogenpolysiloxane in which a part or all of methyl groups in these exemplified compounds are substituted with another alkyl group or phenyl group, etc.

The organohydrogenpolysiloxane of the component (B) may be a polyvalent aromatic ring-containing organohydrogenpolysiloxane having typically divalent to tetravalent aromatic ring-containing hydrocarbon skeletons at a part of the siloxane skeleton (-Si-O-Si-) constituting the molecule (typically, a part of positions at an oxygen atom forming the siloxane bond) in the above exemplified compound etc. Examples of the hydrocarbon skeletons include a phenylene skeleton, a bisphenylene skeleton, a bis(phenylene) ether skeleton, a bis(phenylene)methane skeleton, a 2,2-bis(phenylene)propane skeleton, and a 2,2-bis(phenylene)hexafluoropropane skeleton.

A blend amount of the organohydrogenpolysiloxane of the component (B) is 0.2 to 20 parts by mass, and preferably 0.3 to 10 parts by mass relative to 100 parts by mass of the total of the component (A). If the blend amount is less than 0.2 parts by mass, the crosslinking does not sufficiently proceed, and a cured product having excellent hardness cannot be obtained. If the blended amount is more than 20 parts by mass, the silicone cured product may become inflexible or brittle.

A mole ratio (SiH group / alkenyl group) between: the hydrogen atoms bonded to a silicon atom (SiH group) in the organohydrogenpolysiloxane of the component (B); and a total amount of the alkenyl groups bonded to a silicon atom in the components (A) and (B) (particularly, in the component (A)) is preferably 1.8 to 10, and particularly preferably 2.0 to 5. When this ratio is 1.8 or more and 10 or less, good curability at low temperature can be achieved, and flexibility of the silicone cured product can be maintained.

### [(C) Platinum-Based Catalyst (Platinum Group Metal-Based Catalyst)]

Examples of the component (C) include platinum group metal-based catalysts, such as platinum black, platinum (IV) chloride, chloroplatinic acid, a reaction product of chloroplatinic acid and a monohydric alcohol, a complex of chloroplatinic acid and olefins, and platinum bisacetoacetate.

A blend amount of this platinum group metal-based catalyst can be a catalytic amount, and can be typically, as the platinum group metal (based on mass), approximately 0.5 to 500 ppm, and particularly approximately 1 to 200 ppm relative to a total mass of the components (A) and (B). If the blend amount is less than 0.5 ppm, the curing does not sufficiently proceed. If the blend amount is more than 500 ppm, effect corresponding to the catalyst amount cannot be obtained, which is not economical. The platinum group metal-based catalyst of the component (C) may be used alone, and may be used in combination of two or more thereof.

### [(D) Benzotriazole and/or Benzotriazole Derivative]

The component (D) is benzotriazole and/or a benzotriazole derivative. The benzotriazole derivative is represented by the following general formula (I), 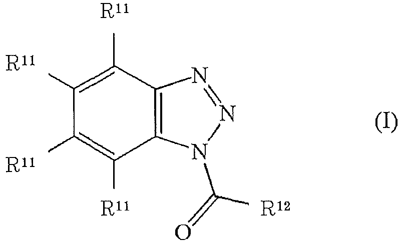
wherein R¹¹ represents a hydrogen atom or a monovalent hydrocarbon group having 1 to 6 carbon atoms, and R¹² represents a monovalent hydrocarbon having 1 to 15 carbon atoms or a group represented by the following general formula (I'), 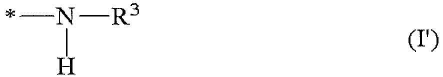
wherein R³ represents -(CH₂)ₐ-Si(OR⁴)₃, R⁴ represents an alkyl group having 1 to 4 carbon atoms or a SiR⁵₃ group (R⁵ represents an alkyl group having 1 to 4 carbon atoms), "a" represents an integer of 1 to 6, and "*" represents a bonding point.

The component (D) interacts with the above platinum-based catalyst of the component (C) to reduce compressive permanent set of the silicone rubber after curing and yield a pot life sufficient for operation.

R¹¹ represents a hydrogen atom or a monovalent hydrocarbon group having 1 to 6 carbon atoms. Examples of the monovalent hydrocarbon group having 1 to 6 carbon atoms include: alkyl groups, such as a methyl group, an ethyl group, a propyl group, an isopropyl group, a butyl group, an isobutyl group, a tert-butyl group, a pentyl group, a neopentyl group, a hexyl group, and a cyclohexyl group; and groups obtained from these groups by substituting a part or all of hydrogen atoms therein with a halogen atom, such as fluorine, bromine, and chlorine, and a cyano group, or the like. Examples of such substituted groups include a chloromethyl group, a chloropropyl group, a bromoethyl group, a trifluoropropyl group, and a cyanoethyl group. Among these, a hydrogen atom or a methyl group is preferable in terms of synthesis.

Specific examples of the benzotriazole derivative are shown below.

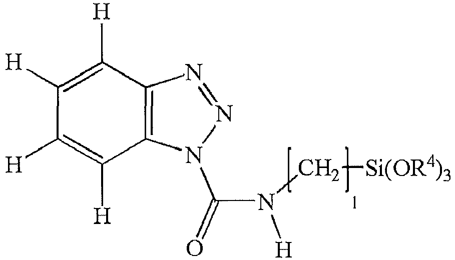

In the formula, "l" represents an integer of 1 to 6, and R⁴ represents an alkyl group or a trialkylsilyl group.

Among these, the most preferable derivatives are shown with the following formulae.

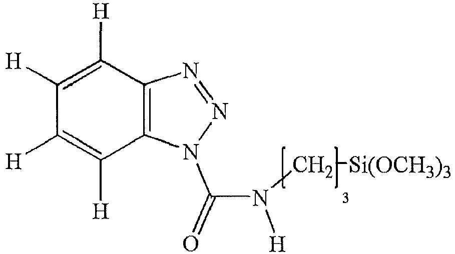

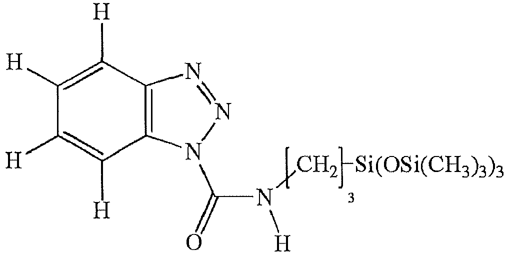

A blend amount of the component (D) is 2 to 100 moles, preferably 5 to 75 moles, and further preferably 10 to 50 moles relative to 1 mole of the platinum atom of the component (C). When the blend amount is 2 to 100 moles, the curability and compressive permanent set become good, and pot life sufficient for operation is obtained. If the blend amount is less than 2 moles, the curing becomes excessively rapid at room temperature. If the blend amount is more than 100 moles, the curing is inhibited. The benzotriazole derivative of the component (D) may be used alone, or may be used in combination of two or more thereof.

### [(E-1) Acetylene Alcohol Compound and/or Compound Modified Thereof with Silane or Siloxane]

The Component (E-1) is an acetylene alcohol compound and/or a compound in which an alcoholic hydroxy group in the acetylene alcohol compound is modified with silane or siloxane. This component (E-1) serves as a reaction inhibitor to the platinum-based catalyst of the component (C), and the addition amount thereof can control a curing start time.

The acetylene alcohol compound of the component (E-1) may be any compound as long as it has an ethynyl group and a hydroxy group in the same molecule, but the ethynyl group and the hydroxy group are preferably bonded to the same carbon atom. Specific examples thereof include the following compounds.

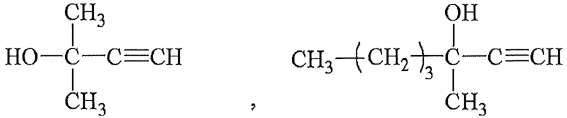

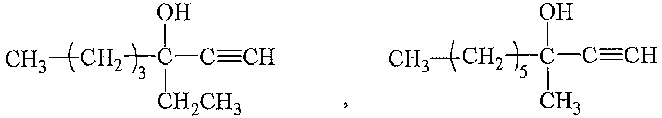

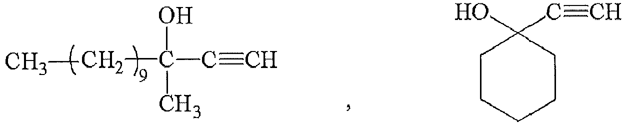

The modified compound of the acetylene alcohol compound at the alcoholic hydroxy group with silane or siloxane is a compound in which the hydroxy group of acetylene is bonded to silane or siloxane in the converted form of a Si-O-C bond. Examples thereof include the following compounds.

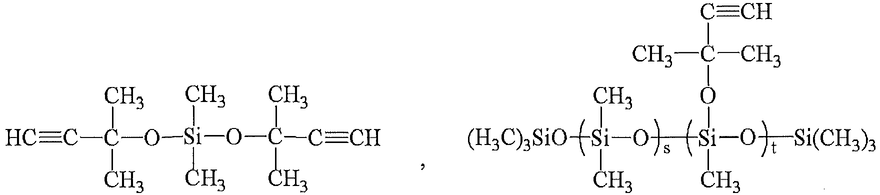

In the formula, "s" represents an integer of 0 to 50, and preferably an integer of 3 to 20. "t" represents an integer of 1 to 50, and preferably an integer of 3 to 20.

A blend amount of the component (E-1) is acetylene / platinum atom (Pt) = 1 to 500 mol/mol, preferably 1 to 300 mol/mol, and more preferably 2 to 200 mol/mol relative to the platinum-based catalyst of the component (C). When the blend amount is 1 to 500 mol/mol, good curability and pot life sufficient for operation can be obtained. In contrast, if the blend amount is less than 1 mol/mol, the curing rate is destabilized. If the blend amount is more than 500 mol/mol, sufficient curing does not occur. The component (E-1) may be used alone, or may be used in combination of two or more thereof.

### [(E-2) Organopolysiloxane Having Large Amount of Alkenyl Groups]

This component (E-2) serves as a reaction inhibitor to the platinum-based catalyst of the component (C), and the addition amount thereof can control a curing start time. In addition, even when added into the same composition, the component (E-2) does not become a catalyst poison, and yields a good storage stability. This component (E-2) differs from the component (A).

The alkenyl-group-containing cyclic organopolysiloxane in the component (E-2) is a cyclic organopolysiloxane having at least one alkenyl group on every silicon atom thereof. In particular, a cyclic organopolysiloxane represented by the following general formula (1) is preferable, 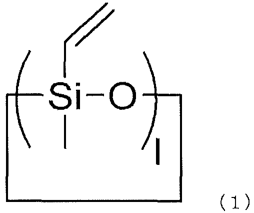 wherein "l" represents 3 or more.

"l" represents 3 or more, and preferably 4 or more. The structure within the above range can yield a sufficient pot life even in a portion where the mixing is ununiform in injection molding.

Specific examples of the alkenyl-group-containing cyclic organopolysiloxane include the following compounds.

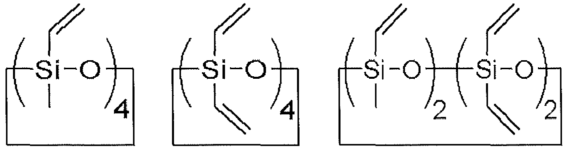

The alkenyl-group-containing chain organopolysiloxane in the component (E-2) is an alkenyl-group-containing chain organopolysiloxane in which a proportion of the alkenyl group to all substituents bonded to a silicon atom is 20 mol% or more. The alkenyl-group containing chain organopolysiloxane is represented by, for example, the following average composition formula (a), and in particular, a structure represented by the following general formula (2) is preferable,

R_{c}Vi_{d}SiO_{(4-c-d)/} (a)

wherein R represents a non-substituted or substituted monovalent hydrocarbon group having 1 to 10, preferably 1 to 8, carbon atoms. R has no aromatic group, and is same as or different from each other. "c" represents 0.7 to 2.1, "d" represents 0.001 to 1.0, and "c+d" represents a positive number satisfying 0.8 to 3.0.

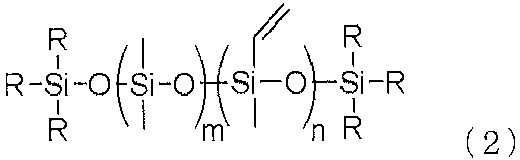

In the formula, R represents a non-substituted or substituted monovalent hydrocarbon group having 1 to 10 carbon atoms, and R being same as or different from each other. "m" represents 0 or more, "n" represents 2 or more, "m+n" represents 2 or more, and "n/(m+n)" represents 0.2 or more.

Examples of the monovalent hydrocarbon group represented by R include: alkyl groups, such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups, such as a phenyl group, a tolyl group, a xylyl group, and a naphthyl group; aralkyl groups, such as a benzyl group, a phenylethyl group, and a phenylpropyl group; alkenyl groups, such as a vinyl group, an allyl group, a propenyl group, an isopropenyl group, a butenyl group, a hexenyl group, a cyclohexenyl group, and an octenyl group; and groups obtained from these groups by substituting a part or all of hydrogen atoms therein with a halogen atom, such as fluorine, bromine, and chlorine, and a cyano group, or the like. Examples of such substituted groups include a chloromethyl group, a chloropropyl group, a bromoethyl group, a trifluoropropyl group, and a cyanoethyl group.

When the alkenyl-group-containing chain organopolysiloxane is represented by the general formula (2), in the formula, "m" represents 0 or more, "n" represents 2 or more, "m+n" represents 2 or more, and "n/(m+n)" represents 0.2 or more. Preferably, "m" represents 0 or more, "n" represents 4 or more, and "m+n" represents 4 or more. An amount of the alkenyl groups relative to all the substituents bonded to a silicon atom is 20 to 100 mol%, preferably 30 to 100 mol%, and more preferably 40 to 100 mol%. The structure within the above range can yield a sufficient pot life even in a portion where the mixing is ununiform in injection molding. Specific examples thereof include the following compounds.

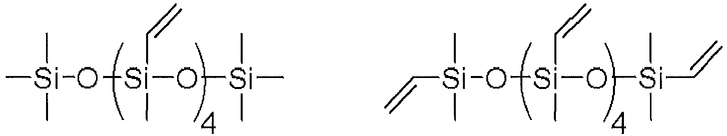

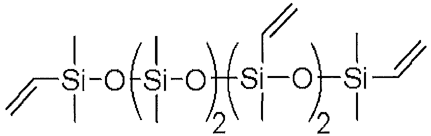

A blend amount of the component (E-2) is the component (E-2) / platinum atom (Pt) = 1 to 500 mol/mol, preferably 10 to 300 mol/mol, and more preferably 20 to 200 mol/mol relative to the platinum-based catalyst of the component (C). When the blend amount is 1 to 500 mol/mol, good curability can be obtained, and a sufficient pot life can be obtained even when a mixing ratio of the two packs changes in injection molding. If the blend amount is less than 1 mol/mol, a sufficient pot life cannot be obtained with changed mixing ratio of the two packs. If the blend amount is more than 500 mol/mol, the silicone rubber cured product becomes brittle. The component (E-2) may be used alone, or may be used in combination of two or more thereof.

### [(F) Reinforcing Silica Fine Powder]

The inventive silicone rubber composition is preferably blended with a reinforcing silica fine powder as a component (F). The component (F) may be blended into the composition X, blended into the composition Y, or blended into both of them. The reinforcing silica fine powder of the component (F) has particularly no limit of a type of silica, and may be any powder as long as it is commonly used as a reinforcing agent for a rubber.

Although a silica fine powder used for a conventional silicone rubber composition can be used as the above reinforcing silica fine powder, preferably used is a reinforcing silica fine powder having a specific surface area with a BET method of 50 m²/g or more. In particular, preferably used are a precipitated silica (wet silica), fumed silica (dry silica), calcined silica, etc. having a specific surface area with the BET method of 50 to 400 m²/g, and particularly 100 to 350 m²/g. Since improving a rubber strength, a fumed silica is particularly preferable.

The component (F) is preferably blended at 5 to 100 parts by mass relative to 100 parts by mass of the component (A). The component (F) within this range yields a sufficient rubber strength.

The reinforcing silica fine powder may be a silica fine powder in which the surface is subjected to a hydrophobization treatment with a surface treatment agent such as an organosilicon compound, which is typically hydrolytic. Example of the organosilicon compound include chlorosilane, an alkoxysilane, and an organosilazane. In this case, these silica fine powders may be a directly hydrophobization-treated product in which the surface is treated with the surface treatment agent in advance in a powder state. These silica fine powders may also be a hydrophobization-treated product in which the surface treatment agent is added during kneading with a silicone oil (e.g., the alkenyl-group-containing organopolysiloxane of the component (A)).

The surface treatment may be performed by a well-known art. For example, the untreated silica fine powder and the surface treatment agent are added into a mechanical kneader or a fluidized bed sealed at a normal pressure, and in the presence of an inert gas as necessary, subjected to a mixing treatment at a room temperature or with a heat treatment (under heating). Depending on circumstances, a catalyst (such as a hydrolysis promoter) may be used to promote the surface treatment. After kneading, the product is dried. Thus, the surface-treated silica fine powder is produced. A blend amount of the surface treatment agent may be any amount as long as it is equal to or more than an amount calculated from a covering area of the treatment agent.

Specific examples of the surface treatment agent include organosilicon compounds, such as: silazanes, such as hexamethyldisilazane; silane coupling agents, such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane, and chloropropyltrimethoxysilane; polymethylsiloxane; and an organohydrogenpolysiloxane. The silica fine powder is surface-treated with these surface treatment agents to be used as the hydrophobic silica fine powder. The surface treatment agent is particularly preferably a silane-based coupling agent or silazanes. The fine powder silica of the component (F) may be used alone, or may be used in combination of two or more thereof.

### [Other Components]

Into the inventive two-pack addition-curable silicone rubber composition, additives may be added in addition to the components noted above, as necessary. Examples of the additives include: metal oxides, such as titanium oxide, iron oxide, cerium oxide, vanadium oxide, cobalt oxide, chromium oxide, and manganese oxide, and composites thereof; and inorganic fillers, such as a quartz powder, diatomaceous earth, calcium carbonate, magnesium carbonate, alumina, carbon, a hollow glass, a hollow resin, conductive inorganic powders such as gold, silver, and copper, and a plated power. A dye, a thermal resistant agent, a flame retardant, a plasticizer, etc. may also be added. An addition amount of these optional components may be a usual amount. These components may be blended into the composition X, blended into the composition Y, or blended into both of them.

### [Method for Preparing Two-Pack Addition-Curable Silicone Rubber Composition]

The inventive two-pack addition-curable silicone rubber composition is separated into the composition X and the composition Y, and prepared so that: the composition X contains at least the components (C) and (E-2); the composition Y contains at least the components (B), (D), and (E-1); and at least any one of the compositions X or Y contains the component (A). The inventive two-pack addition-curable silicone rubber composition can be cured by mixing the composition X and the composition Y.

This two-pack addition-curable silicone rubber composition can be obtained by simply separating the components (A) to (E-2) and the optional components noted above into the composition X and the composition Y, and uniformly mixing the compositions at a normal temperature. However, both the composition X and the composition Y may be preferably obtained by: heat-treating the component (F), the surface treatment agent, water, and all or a part of the component (A) with a planetary mixer, a kneader, or the like at a temperature of 100 to 200°C for 1 to 4 hours; cooling the mixture to a room temperature; and then adding the remaining components and the optional components to be mixed.

A viscosity at 25°C with a sharing rate of 0.9 s⁻¹ when the composition X and the composition Y are mixed is preferably 50 to 5,000 Pa·s, more preferably 80 to 4,000 Pa·s, and further preferably 100 to 3,000 Pa·s. The viscosity of 50 Pa·s or more and 5,000 Pa·s or less facilitates the molding.

Note that, in the present invention, the viscosity can be measured with a shear viscometer: HAAKE MARS40 Rheometer (manufactured by Thermo Fisher Scientific K.K.).

The inventive two-pack addition-curable silicone rubber composition, which has a sufficient pot life, preferably has η₂₄ ≤ 5000 Pa·s or less, more preferably 4,000 Pa·s or less, and further preferably 3,000 Pa·s or less, where η₂₄ is a viscosity at a shearing rate of 0.9 s⁻¹ of an uniform mixture of the composition (X) and the composition (Y) after still standing at 25°C for 24 hours. The lower limit of η₂₄ is not particularly limited, and may be 50 Pa·s or more. When η₂₄ is 5,000 Pa·s or less, the molding does not become difficult even after a long time from mixing the two packs.

### [Method for Molding Two-Pack Addition-Curable Silicone Rubber Composition / Silicone Rubber Cured Product]

A method for molding the inventive two-pack addition-curable silicone rubber composition can be freely selected depending on the viscosity of the mixture, and may be any method of cast molding, compression molding, dispenser molding, injection molding, extrusion molding, transfer molding, etc.

The heat molding can be performed under a curing condition within a range of, typically 60 to 220°C for 5 seconds to 1 hour.

The inventive two-pack addition-curable silicone rubber composition does not lower the curability even when stored in a long term. Where T10 and T90 (second) are defined as a 10% curing time and a 90% curing time for the case measured at 110 °C for 5 minutes (that is, an elapsed time from the beginning of the measurement when 10% and 90% torque of the maximum torque are yielded, the maximum torque obtained 5 minutes after the beginning of the measurement at 110 °C) in a curing test using a torsion oscillating corn-die curemeter in accordance with JIS K 6300-2:2001, a curing rate of a mixture in which the composition X and the composition Y are each separately stored at 80 °C for 3 days and then uniformly mixed is preferably T10 of 10 to 60 seconds and (T90-T10) of 50 seconds or shorter, more preferably T10 of 15 to 55 seconds and (T90-T10) of 45 seconds or shorter, further preferably T10 of 20 to 50 seconds and (T90-T10) of 40 seconds or shorter. The lower limit of (T90-T10) is not particularly limited, but may be 10 seconds or longer. Within the above range, operability is good.

### EXAMPLE

Hereinafter, the present invention will be described specifically with Examples and Comparative Examples, but the present invention is not limited to the following Examples. Note that "parts" in the following examples indicates "parts by mass".

### [Preparation Example 1]

Mixing of 60 parts of a dimethylpolysiloxane (A1) blocked at both terminals of the molecular chain with dimethylvinylsiloxy groups and having an average polymerization degree of 750, 40 parts of a fumed silica (F1) (manufactured by NIPPON AEROSIL CO., LTD., AEROSIL 300) having a specific surface area with the BET method of 300 m²/g, 8.0 parts of hexamethyldisilazane, and 2.0 parts of water was performed at a room temperature for 60 minutes. Then, the mixture was heated to 150°C and stirred for 4 hours. Thereafter, 30 parts of the dimethylpolysiloxane (A1) was further added to be mixed until the mixture became uniform, and then the mixture was cooled to obtain a silicone rubber base A.

### [Example 1]

A mixing ratio between a composition X and a composition Y, described below, is basically 1:1.

### Preparation Condition of Composition X-1

Into 100 parts of the silicone rubber base A, 13.08 parts of a dimethylpolysiloxane (A2) blocked at both terminals of the molecular chain with dimethylvinylsiloxy groups and having an average polymerization degree of 220, 2.31 parts of a dimethylpolysiloxane (A3) blocked at both terminals of the molecular chain with trimethylsiloxy groups and 5 mol% of methyl groups in side chains (that is, monovalent groups or atoms bonded to a silicon atom in a diorganosiloxane unit constituting the main chain, the same applies hereinafter) were substituted with vinyl groups and having an average polymerization degree of 200, 0.31 parts (91 moles relative to Pt atom) of 1,3,5,7-tetravinyltetramethylcyclotetrasiloxane (E-2) as a reaction inhibitor, and 0.39 parts of a toluene solution (C-1) of a complex of platinum and 1,3-divinyl-1,1,3,3-tetramethyldisiloxane (1 mass% of platinum atom) were added. The mixture was stirred for 30 minutes to obtain a uniform silicone rubber composition X-1.

### Preparation Condition of Composition Y-1

Into 100 parts of the silicone rubber base A, 10.77 parts of a dimethylpolysiloxane (A3) blocked at both terminals of the molecular chain with trimethylsiloxy groups and 5 mol% of methyl groups in side chains (that is, monovalent groups or atoms bonded to a silicon atom in a diorganosiloxane unit constituting the main chain, the same applies hereinafter) were substituted with vinyl groups and having an average polymerization degree of 200, 5.15 parts of a methylhydrogenpolysiloxane (B) blocked at both terminals of the molecular chain with trimethylsiloxy groups and having SiH groups on the side chain (dimethylsiloxane-methylhydrogensiloxane copolymer blocked at both terminals of the molecular chain with trimethylsiloxy groups, polymerization degree: 64, SiH group amount: 0.0113 mol/g) as a crosslinker, and 0.31 parts of a benzotriazole derivative (D1) represented by the following formula (5) (benzotriazole derivative / Pt atom = 48 mol/mol) were added, and 0.08 parts of ethynylcyclohexanol (E-1-1) (acetylene / Pt atom = 38 mol/mol) as a reaction inhibitor was added, and the mixture was stirred for 30 minutes to obtain a uniform silicone rubber composition Y-1.

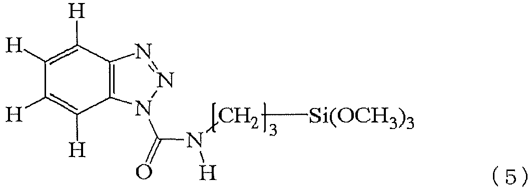

The silicone rubber compositions X-1 and Y-1 were mixed at each 100 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-1 and Y-1 were mixed at each 100 parts by mass, and a mixture in which each of the silicone rubber compositions X-1 and Y-1 was separately stored under a condition at 80°C for 3 days and then mixed at each 100 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-1 and Y-1 were injection-molded at a ratio of 1:1 with an injection molding machine (manufactured by ARBURG GmbH, product name: Allrounder 420C). Table 1 shows an appearance of the composition and availability of restarting the molding after leaving the composition in the machine for 2 days.

### [Example 2]

The silicone rubber compositions X-1 and Y-1 were mixed at a ratio of 120 and 80 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-1 and Y-1 were mixed at a ratio of 120 and 80 parts by mass, and a mixture in which each of the silicone rubber compositions X-1 and Y-1 was separately stored under a condition at 80°C for 3 days and then mixed at a ratio of 120 and 80 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-1 and Y-1 were injection-molded at a ratio of 3:2 with an injection molding machine (manufactured by ARBURG GmbH, product name: Allrounder 420C). Table 1 shows an appearance of the composition and availability of restarting the molding after leaving the composition in the machine for 2 days.

### [Example 3]

The silicone rubber compositions X-1 and Y-1 were mixed at a ratio of 140 and 60 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-1 and Y-1 were mixed at a ratio of 140 and 60 parts by mass, and a mixture in which each of the silicone rubber compositions X-1 and Y-1 was separately stored under a condition at 80°C for 3 days and then mixed at a ratio of 140 and 60 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-1 and Y-1 were injection-molded at a ratio of 7:3 with an injection molding machine (manufactured by ARBURG GmbH, product name: Allrounder 420C). Table 1 shows an appearance of the composition and availability of restarting the molding after leaving the composition in the machine for 2 days.

### [Example 4]

### Preparation Condition of Composition X-2

Into 100 parts of the silicone rubber base A, 13.08 parts of a dimethylpolysiloxane (A2) blocked at both terminals of the molecular chain with dimethylvinylsiloxy groups and having an average polymerization degree of 220, 2.31 parts of a dimethylpolysiloxane (A3) blocked at both terminals of the molecular chain with trimethylsiloxy groups and 5 mol% of methyl groups in side chains (that is, monovalent groups or atoms bonded to a silicon atom in a diorganosiloxane unit constituting the main chain, the same applies hereinafter) were substituted with vinyl groups and having an average polymerization degree of 200, 1.54 parts (456 moles relative to Pt atom) of 1,3,5,7-tetravinyltetramethylcyclotetrasiloxane (E-2) as a reaction inhibitor, and 0.39 parts of a toluene solution (C-1) of a complex of platinum and 1,3-divinyl-1,1,3,3-tetramethyldisiloxane (1 mass% of platinum atom) were added. The mixture was stirred for 30 minutes to obtain a uniform silicone rubber composition X-2.

The silicone rubber compositions X-2 and Y-1 were mixed at each 100 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-2 and Y-1 were mixed at each 100 parts by mass, or a mixture in which each of the silicone rubber compositions X-2 and Y-1 was separately stored under a condition at 80°C for 3 days and then mixed at each 100 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-2 and Y-1 were injection-molded at a ratio of 1:1 with an injection molding machine (manufactured by ARBURG GmbH, product name: Allrounder 420C). Table 1 shows an appearance of the composition and availability of restarting the molding after leaving the composition in the machine for 2 days.

### [Example 5]

### Preparation Condition of Composition Y-2

Into 100 parts of the silicone rubber base A, 10.77 parts of a dimethylpolysiloxane (A3) blocked at both terminals of the molecular chain with trimethylsiloxy groups and 5 mol% of methyl groups in side chains (that is, monovalent groups or atoms bonded to a silicon atom in a diorganosiloxane unit constituting the main chain, the same applies hereinafter) were substituted with vinyl groups and having an average polymerization degree of 200, 5.15 parts of a methylhydrogenpolysiloxane (B) blocked at both terminals of the molecular chain with trimethylsiloxy groups and having SiH groups on the side chain (dimethylsiloxane-methylhydrogensiloxane copolymer blocked at both terminals of the main chain with trimethylsiloxy groups, polymerization degree: 64, SiH group amount: 0.0113 mol/g) as a crosslinker, and 0.31 parts of the benzotriazole derivative (D1) (benzotriazole derivative / Pt atom = 48 mol/mol) were added, and 0.08 parts of a compound having the following structure (E-1-2) (acetylene / Pt atom = 38 mol/mol) as a reaction inhibitor was added, and the mixture was stirred for 30 minutes to obtain a uniform silicone rubber blend Y-2.

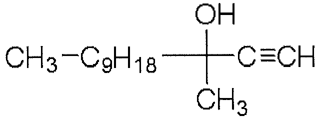

The silicone rubber compositions X-1 and Y-2 were mixed at each 100 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-1 and Y-2 were mixed at each 100 parts by mass, and a mixture in which each of the silicone rubber compositions X-1 and Y-2 was separately stored under a condition at 80°C for 3 days and then mixed at each 100 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-1 and Y-2 were injection-molded at a ratio of 1:1 with an injection molding machine (manufactured by ARBURG GmbH, product name: Allrounder 420C). Table 1 shows an appearance of the composition and availability of restarting the molding after leaving the composition in the machine for 2 days.

### [Comparative Example 1]

### Preparation Condition of Composition X-3

Into 100 parts of the silicone rubber base A, 13.08 parts of a dimethylpolysiloxane (A2) blocked at both terminals of the molecular chain with dimethylvinylsiloxy groups and having an average polymerization degree of 220, 2.31 parts of a dimethylpolysiloxane (A3) blocked at both terminals of the molecular chain with trimethylsiloxy groups, having 5 mol% of methyl groups in side chains (that is, monovalent groups or atoms bonded to a silicon atom in a diorganosiloxane unit constituting the main chain, the same applies hereinafter) substituted with vinyl groups, and having an average polymerization degree of 200, and 0.39 parts of a toluene solution (C-1) of a complex of platinum and 1,3-divinyl-1,1,3,3-tetramethyldisiloxane (1 mass% of platinum atom) were added. The mixture was stirred for 30 minutes to obtain a uniform silicone rubber composition X-3.

### Preparation Condition of Composition Y-3

Into 100 parts of the silicone rubber base A, 10.77 parts of a dimethylpolysiloxane (A3) blocked at both terminals of the molecular chain with trimethylsiloxy groups, having 5 mol% of methyl groups in side chains (that is, monovalent groups or atoms bonded to a silicon atom in a diorganosiloxane unit constituting the main chain, the same applies hereinafter) substituted with vinyl groups, and having an average polymerization degree of 200, and 5.15 parts of a methylhydrogenpolysiloxane (B) blocked at both terminals of the molecular chain with trimethylsiloxy groups and having SiH groups on the side chain (dimethylsiloxane-methylhydrogensiloxane copolymer blocked at both terminals of the molecular chain with trimethylsiloxy groups, polymerization degree: 64, SiH group amount: 0.0113 mol/g) as a crosslinker were added, and 0.08 parts of ethynylcyclohexanol (E-1-1) (acetylene / Pt atom = 38 mol/mol) as a reaction inhibitor was added, and the mixture was stirred for 30 minutes to obtain a uniform silicone rubber blend Y-3.

The silicone rubber compositions X-3 and Y-3 were mixed at each 100 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-3 and Y-3 were mixed at each 100 parts by mass, and a mixture in which each of the silicone rubber compositions X-3 and Y-3 was separately stored under a condition at 80°C for 3 days and then mixed at each 100 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-3 and Y-3 were injection-molded at a ratio of 1:1 with an injection molding machine (manufactured by ARBURG GmbH, product name: Allrounder 420C). Table 1 shows an appearance of the composition and availability of restarting the molding after leaving the composition in the machine for 2 days.

### [Comparative Example 2]

The silicone rubber compositions X-3 and Y-1 were mixed at each 100 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-3 and Y-1 were mixed at each 100 parts by mass, and a mixture in which each of the silicone rubber compositions X-3 and Y-1 was separately stored under a condition at 80°C for 3 days and then mixed at each 100 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-3 and Y-1 were injection-molded at a ratio of 1:1 with an injection molding machine (manufactured by ARBURG GmbH, product name: Allrounder 420C). Table 1 shows an appearance of the composition and availability of restarting the molding after leaving the composition in the machine for 2 days.

### [Comparative Example 3]

The silicone rubber compositions X-3 and Y-1 were mixed at a ratio of 120 and 80 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-3 and Y-1 were mixed at a ratio of 120 and 80 parts by mass, and a mixture in which each of the silicone rubber compositions X-3 and Y-1 was separately stored under a condition at 80°C for 3 days and then mixed at a ratio of 120 and 80 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-3 and Y-1 were injection-molded at a ratio of 3:2 with an injection molding machine (manufactured by ARBURG GmbH, product name: Allrounder 420C). Table 1 shows an appearance of the composition and availability of restarting the molding after leaving the composition in the machine for 2 days.

### [Comparative Example 4]

The silicone rubber compositions X-3 and Y-1 were mixed at a ratio of 140 and 60 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-3 and Y-1 were mixed at a ratio of 140 and 60 parts by mass, and a mixture in which each of the silicone rubber compositions X-3 and Y-1 was separately stored under a condition at 80°C for 3 days and then mixed at a ratio of 140 and 60 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-3 and Y-1 were injection-molded at a ratio of 7:3 with an injection molding machine (manufactured by ARBURG GmbH, product name: Allrounder 420C). Table 1 shows an appearance of the composition and availability of restarting the molding after leaving the composition in the machine for 2 days.

### [Comparative Example 5]

### Preparation Condition of Composition X-4

Into 100 parts of the silicone rubber base A, 13.08 parts of a dimethylpolysiloxane (A2) blocked at both terminals of the molecular chain with dimethylvinylsiloxy groups and having an average polymerization degree of 220, 2.31 parts of a dimethylpolysiloxane (A3) blocked at both terminals of the molecular chain with trimethylsiloxy groups, having 5 mol% of methyl groups in side chains (that is, monovalent groups or atoms bonded to a silicon atom in a diorganosiloxane unit constituting the main chain, the same applies hereinafter) substituted with vinyl groups, and having an average polymerization degree of 200, and 0.31 parts of the benzotriazole derivative (D1) (benzotriazole derivative / Pt atom = 48 mol/mol) as a reaction inhibitor were added, and 0.39 parts of a toluene solution (C-1) of a complex of platinum and 1,3-divinyl-1,1,3,3-tetramethyldisiloxane (1 mass% of platinum atom) was added. The mixture was stirred for 30 minutes to obtain a uniform silicone rubber composition X-4.

The silicone rubber compositions X-4 and Y-3 were mixed at each 100 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-4 and Y-3 were mixed at each 100 parts by mass, and a mixture in which each of the silicone rubber compositions X-4 and Y-3 was separately stored under a condition at 80°C for 3 days and then mixed each 100 parts by mass. As the curability at 110°C, T10, T90, and (T90-T10) were measured with Rheometer MDR2000 (manufactured by Alpha Technologies Inc.). Table 1 shows the results.

The silicone rubber compositions X-4 and Y-3 were injection-molded at a ratio of 1:1 with an injection molding machine (manufactured by ARBURG GmbH, product name: Allrounder 420C). Table 1 shows an appearance of the composition and availability of restarting the molding after leaving the composition in the machine for 2 days.

### [Comparative Example 6]

### Preparation Condition of Composition X-5

Into 100 parts of the silicone rubber base A, 13.08 parts of a dimethylpolysiloxane (A2) blocked at both terminals of the molecular chain with dimethylvinylsiloxy groups and having an average polymerization degree of 220, 2.31 parts of a dimethylpolysiloxane (A3) blocked at both terminals of the molecular chain with trimethylsiloxy groups, having 5 mol% of methyl groups in side chains (that is, monovalent groups or atoms bonded to a silicon atom in a diorganosiloxane unit constituting the main chain, the same applies hereinafter) substituted with vinyl groups, and having an average polymerization degree of 200, and 0.39 parts of a toluene solution (C-1) of a complex of platinum and 1,3-divinyl-1,1,3,3-tetramethyldisiloxane (1 mass% of platinum atom) were added. The mixture was stirred for 30 minutes to obtain a uniform silicone rubber composition X-5.

### Preparation Condition of Composition Y-4

Into 100 parts of the silicone rubber base A, 10.77 parts of a dimethylpolysiloxane (A3) blocked at both terminals of the molecular chain with trimethylsiloxy groups, having 5 mol% of methyl groups in side chains (that is, monovalent groups or atoms bonded to a silicon atom in a diorganosiloxane unit constituting the main chain, the same applies hereinafter) substituted with vinyl groups, and having an average polymerization degree of 200, 5.15 parts of a methylhydrogenpolysiloxane (B) blocked at both terminals of the molecular chain with trimethylsiloxy groups and having SiH groups on the side chain (dimethylsiloxane-methylhydrogensiloxane copolymer blocked at both terminals of the molecular chain with trimethylsiloxy groups, polymerization degree: 64, SiH group amount: 0.0113 mol/g) as a crosslinker, and 0.31 parts of the benzotriazole derivative (D1) (benzotriazole derivative / Pt atom = 48 mol/mol) were added, and 0.08 parts of ethynylcyclohexanol (E1-1) (acetylene / Pt atom = 38 mol/mol) and 0.31 parts (91 moles relative to Pt atom) of 1,3,5,7-tetravinyltetramethylcyclotetrasiloxane (E-2) were added as reaction inhibitors. The mixture was stirred for 30 minutes to obtain a uniform silicone rubber blend Y-4.

The silicone rubber compositions X-5 and Y-4 were mixed at each 100 parts by mass to measure viscosities at 25°C and at a shearing rate of 0.9 s⁻¹. The viscosities, η₀ and η₂₄, were an initial viscosity and a viscosity after 24 hours, respectively. Table 1 shows the results.

Prepared were the mixture in which the silicone rubber compositions X-5 and Y-4 were mixed at each 100 parts by mass, and a mixture in which each of the silicone rubber compositions X-5 and Y-4 was separately stored under a condition at 80°C for 3 days and then mixed at each 100 parts by mass. As the curability at 110°C, T10, T90, and (T90-T10) were measured with Rheometer MDR2000 (manufactured by Alpha Technologies Inc.). Table 1 shows the results.

Furthermore, the silicone rubber compositions X-5 and Y-4 were injection-molded at a ratio of 1:1 with an injection molding machine (manufactured by ARBURG GmbH, product name: Allrounder 420C). Table 1 shows an appearance of the composition and availability of restarting the molding after leaving the composition in the machine for 2 days.

### [Comparative Example 7]

### Preparation Condition of Composition (1)

Into 100 parts of the silicone rubber base A, 13.08 parts of a dimethylpolysiloxane (A2) blocked at both terminals of the molecular chain with dimethylvinylsiloxy groups and having an average polymerization degree of 220, 2.31 parts of a dimethylpolysiloxane (A3) blocked at both terminals of the molecular chain with trimethylsiloxy groups, having 5 mol% of methyl groups in side chains (that is, monovalent groups or atoms bonded to a silicon atom in a diorganosiloxane unit constituting the main chain, the same applies hereinafter) substituted with vinyl groups, and having an average polymerization degree of 200, 0.04 parts of ethynylcyclohexanol (E1-1) (acetylene / Pt atom = 19 mol/mol) as a reaction inhibitor, and 0.39 parts of a toluene solution (C-1) of a complex of platinum and 1,3-divinyl-1,1,3,3-tetramethyldisiloxane (1 mass% of platinum atom) were added. The mixture was stirred for 30 minutes to obtain a uniform silicone rubber composition X-6. However, the appearance became black, and thereby the investigation was abandoned.

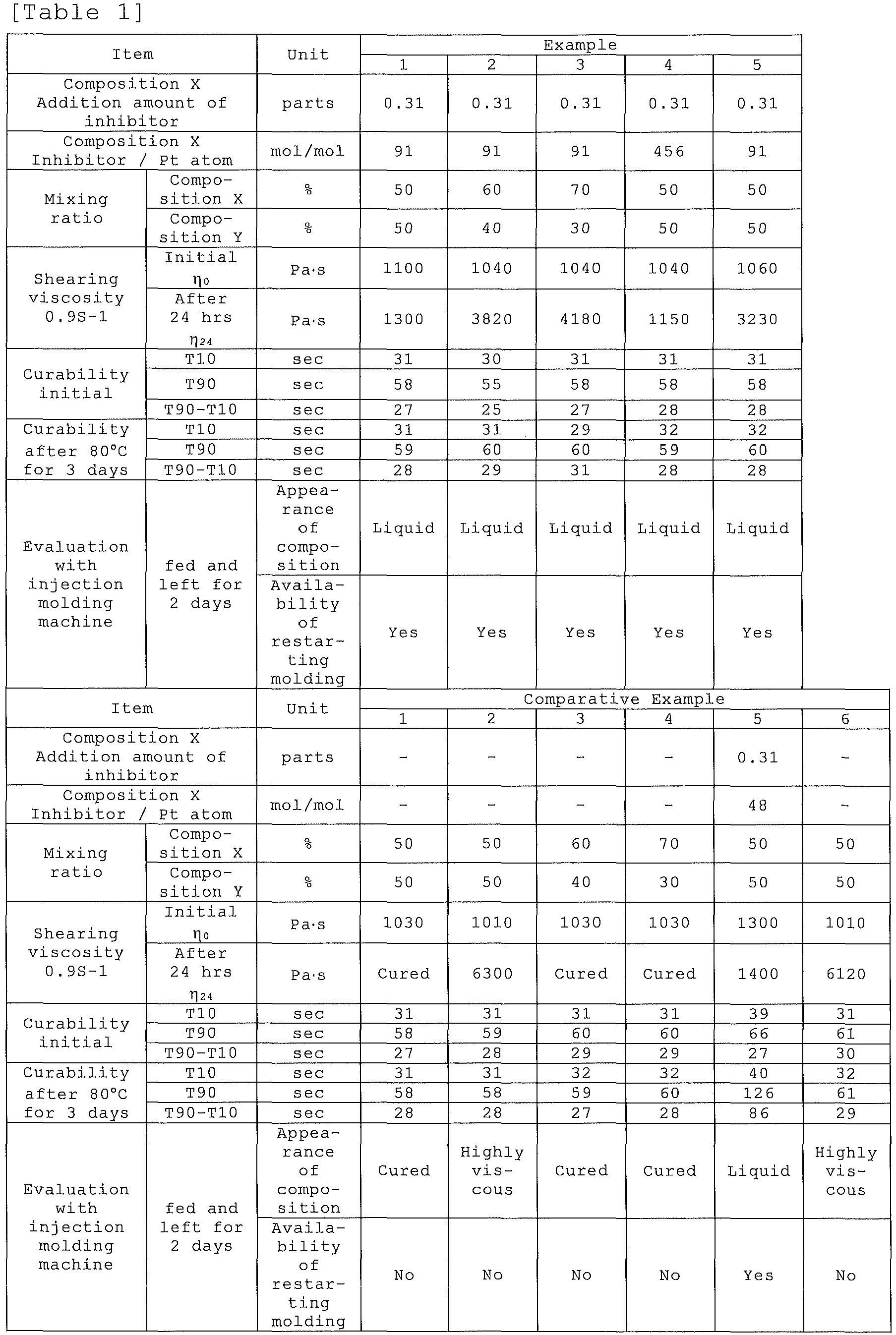

Any of the inventive Examples have a sufficiently low shearing viscosity even after the lapse of 24 hours from mixing, and also has excellent curing performance of course when cured immediately after prepared and even when prepared and then left at 80°C for 3 days and then mixed and cured. In addition, in injection molding, any of the mixture fed and left for 2 days are liquid, and capable of restarting the molding.

Meanwhile, Comparative Examples 1 to 4 and 6 resulted in the composition that was cured or had a high shearing viscosity after the lapse of 24 hours from mixing. In injection molding, the mixture fed and then left for 2 days was cured or became highly viscous, and the molding could not be restarted. Comparative Example 5, in which the component (D) was added into the composition X side, resulted good shearing viscosity and good injection molding evaluation with an injection molding machine, but deteriorated the curing performance in the test for evaluating the storability when the mixture was prepared and left at 80°C for 3 days and then mixed and cured.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A two-pack addition-curable silicone rubber composition, comprising:
(A) 100 parts by mass of an alkenyl-group-containing organopolysiloxane having at least two alkenyl groups bonded to a silicon atom in one molecule;
(B) 0.2 to 20 parts by mass of an organohydrogenpolysiloxane having at least two hydrogen atoms bonded to a silicon atom in one molecule;
(C) 0.5 to 500 ppm, as a platinum group metal, of a platinum-based catalyst relative to a total mass of the components (A) and (B) based on mass;
(D) 2 to 100 moles of benzotriazole and/or a benzotriazole derivative relative to 1 mole of the platinum atom of the component (C);
(E-1) an acetylene alcohol compound and/or a compound in which an alcoholic hydroxy group of the acetylene alcohol compound is modified with silane or siloxane at 1 to 500 moles of an acetylene group relative to 1 mole of the platinum atom of the component (C); and
(E-2) an alkenyl-group-containing cyclic organopolysiloxane having at least one alkenyl group on every silicon atom thereof and/or an alkenyl-group-containing chain organopolysiloxane in which a proportion of alkenyl groups to total substituents bonded to a silicon atom is 20 mol% or more, the organopolysiloxanes differing from the component (A), at 1 to 500 moles relative to 1 mole of the platinum atom of the component (C),
wherein a composition X contains at least the components (C) and (E-2), a composition Y contains at least the components (B), (D), and (E-1), at least one of the compositions X or Y contains the component (A), and the two-pack addition-curable silicone rubber composition is curable by mixing the composition X and the composition Y.

2. The two-pack addition-curable silicone rubber composition according to claim 1, wherein the alkenyl-group-containing cyclic organopolysiloxane in the component (E-2) is represented by the following general formula (1), 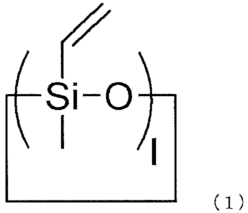
wherein l represents 3 or more, and/or
the alkenyl-group-containing chain organopolysiloxane in the component (E-2) is represented by the following general formula (2), 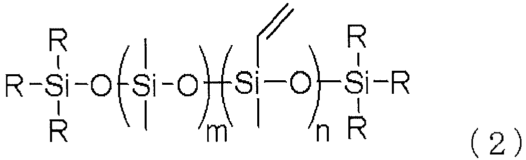
wherein R represents a non-substituted or substituted monovalent hydrocarbon group having 1 to 10 carbon atoms, R being same as or different from each other, m represents 0 or more, n represents 2 or more, m+n represents 2 or more, and n/(m+n) represents 0.2 or more.

3. The two-pack addition-curable silicone rubber composition according to claim 1 or 2, further comprising 5 to 100 parts by mass of a reinforcing silica fine powder as a component (F) relative to 100 parts by mass of the component (A).

4. The two-pack addition-curable silicone rubber composition according to claim 3, wherein the component (F) is a fumed silica having a specific surface area with a BET method of 50 m²/g or more.

5. The two-pack addition-curable silicone rubber composition according to any one of claims 1 to 4, wherein
where T10 is defined as a curing time yielding 10% torque of a maximum torque, the maximum torque obtained from curing at 110 °C for 5 minutes followed by measuring a degree of curing in a curing test using a torsion oscillating corn-die curemeter in accordance with JIS K 6300-2:2001, and T90 is defined as a curing time yielding 90% torque of the maximum torque,
a curing rate of a mixture in which the composition X and the composition Y are each separately stored at 80°C for 3 days and then uniformly mixed has T10 of 10 to 60 seconds and (T90-T10) of 50 seconds or shorter.

6. The two-pack addition-curable silicone rubber composition according to any one of claims 1 to 5, wherein η₂₄ ≤ 5000 Pa·s or less where η₂₄ is a viscosity at a shearing rate of 0.9 s⁻¹ of an uniform mixture of the composition X and the composition Y after still standing at 25°C for 24 hours.
